# EUROPEAN PATENT APPLICATION

(11) **EP 4 836 347 A1**
(43) Date of publication of application: **04.11.2026**
(21) Application number: 25173872.0
(22) Date of filing: 01.05.2025
(51) Int. Cl.: H04L 9/08, H04L 9/32, H04L 9/00

(54) **METHOD FOR GENERATING DIGITAL SIGNATURES USING FINITE SETS OF PRIVATE KEYS**

(71) Applicant: Nagravision Sàrl, 1033 Cheseaux-sur-Lausanne (CH)
(72) Inventor: Conus, Christian, 1033 Cheseaux-sur Lausanne (CH); VIllegas, Karine, 1033 Cheseaux-sur Lausanne (CH)
(74) Representative: Novagraaf International SA

(57) **Abstract**

The present disclosure provides a method for generating digital signatures using at least one finite set of private keys, each set being associated with a public key. The method comprises generating (355) signatures using private keys from the at least one set, with each private key used only once to generate one signature, while updating a set-related state information (θi) for tracking the one-time use of keys of said set. For at least one signature to be generated, updating (353) the set-related state information (θi) is performed prior to generating (355) said signature. The method may further include, prior to switching from a current set (i) to a subsequent set (i+1), signing (365) the public key (PKi+1) of said subsequent set using a private key (SKi,f(θi)) of said current set (i).

## Description

### FIELD OF INVENTION

The present disclosure relates to digital signature generation systems, and more particularly to a method and system for generating digital signatures using finite sets of private keys with state management for enhanced security.

### BACKGROUND

Digital signatures play a crucial role in modem cryptography, providing mechanisms for authenticating the origin and integrity of digital data, messages or files. As electronic communications and transactions have become increasingly prevalent, the need for robust and secure digital signature schemes has grown substantially.

Traditional digital signature algorithms, such as RSA and Elliptic Curve based Cryptography, have been widely used for many years. These algorithms rely on mathematical problems that are considered computationally difficult to solve with classical computers. However, the emergence of quantum computing poses a potential threat to the security of these conventional signature schemes.

Quantum computers have the potential to solve certain mathematical problems exponentially faster than classical computers. This capability could potentially break the security assumptions underlying many current cryptographic systems, including widely used digital signature algorithms.

In response to this emerging threat, post-quantum cryptography algorithms have been developed in recent years. They aim to provide security against attacks by both classical and quantum computers. Among the various post-quantum cryptography approaches, hash-based signature algorithms have emerged as promising candidates due to their security properties and relatively simple underlying mathematics.

Hash-based signature algorithms utilize cryptographic hash functions. These algorithms can be categorized into two types: stateless and stateful. Stateless algorithms generate signatures without maintaining any internal state between signatures, while stateful algorithms require the signer to keep track of the keys used for each signature.

Stateful hash-based signature algorithms offer certain advantages in terms of efficiency and smaller signature sizes compared to the stateless hash-based signature algorithms. However, they require efficient key management and state maintenance. The security of these algorithms relies heavily on ensuring that each private key is used only once for signing. Reusing a private key in a stateful hash-based signature algorithm compromises the security of all subsequent signatures.

Implementing stateful hash-based signature algorithms in practical systems presents several hurdles.

A major hurdle is managing the state information associated with key usage. This state must be persistently and securely stored, and correctly updated. Failures in state management, such as state rollbacks or inconsistencies, can result in key reuse and security vulnerabilities.

Another hurdle is the limited number of signatures that can be generated due to the finite nature of the key sets in stateful hash-based signature algorithms.

Another hurdle is handling concurrent signature requests, particularly in systems running multiple applications simultaneously. Ensuring that the state is updated correctly and that no two signing operations use the same key simultaneously is challenging.

Backup and recovery procedures for stateful hash-based signature algorithms is also challenging. Traditional backup methods may not be suitable, as restoring from an old backup could lead to the reuse of already-used keys.

It has been appreciated that a method is needed that overcomes one or more of these problems.

### SUMMARY

This Summary is provided to introduce a selection of concepts in a simplified form that are further described below in the Detailed Description.

This summary is provided to introduce a selection of concepts in a simplified form that are further described below in the detailed description.

In a first aspect, a method for generating digital signatures using at least one finite set of private keys is provided. The method comprises: generating signatures using the private keys from the at least one set, with each private key used only once to generate one signature, while updating a set-related state information for tracking the one-time use of keys of said set; wherein, for at least one signature to be generated, updating the set-related state information is performed prior to generating said signature.

This approach ensures that the state information is updated before signature generation, reducing the risk of key reuse and enhancing the security of the signature scheme.

The method may further include, when a plurality of finite sets of private keys are successively used for generating the signatures, prior to switching from a current set to a subsequent set, signing the public key of said subsequent set using a private key of said current set.

This feature enables a secure transition between key sets, maintaining a chain of trust and allowing for continuous operation of the signature scheme.

Switching from the current set to the subsequent set may be performed in response to determining that a predetermined switching condition has been satisfied, wherein the predetermined switching condition includes at least one of a count of unused keys in the current set that is less than or equal to a predefined limit and the expiration of a validity period assigned to the current set.

By implementing predetermined switching conditions, the method ensures timely transitions between key sets, preventing key exhaustion and maintaining the overall security of the system.

For each set, an information including the validity period of said set may be cryptographically protected by at least one algorithm from the group comprising authentication and encryption, to be stored and used by the at least one processor.

The method may further comprise, for each signature, computing the corresponding private key by executing a key derivation process from a seed or master key, wherein the information including the validity period of the current set is used as an input parameter in the key derivation process.

Incorporating the validity period into the key derivation process adds an additional layer of security, ensuring that keys can only be derived within their designated validity periods.

The method may include generating or acquiring the subsequent set of private keys and the associated public key in response to determining that a pre-switch condition has been satisfied.

This proactive approach to key set generation ensures that new keys are ready when needed, minimizing potential disruptions in the signature generation process.

The method may further comprise transmitting a key update message including the signed public key of the subsequent set to at least one validation entity configured to validate the signatures.

Transmitting key update messages allows validation entities to stay synchronized with the current key set, ensuring continuous signature verification capabilities.

The key update message may further include temporal metadata comprising at least one of an indication of a point in time from which the public key of the subsequent set is to be used and a validity period of the public key of the subsequent set.

Including temporal metadata, or timing information, in the key update message enables smooth transitions between key sets for receiving entities, reducing the risk of signature verification failures during key set changes.

The method may further comprise, for at least one signature to be generated, updating a set-related backup state information, distinct from the set-related state information, in advance of the corresponding update made to the set-related state information.

Maintaining a separate backup state and updating it ahead of the main state enhance the system's resilience against data loss or corruption.

Upon initiation of use of the or each set of private keys, the method may include initializing the set-related state information to a first initial state value and initializing the set-related backup state information to a second initial state value, wherein the second initial state value is derived by increasing the first initial state value by a predefined increment.

This initialization process ensures that the backup state is always ahead of the main state, providing a safety margin in case of system failures or inconsistencies.

The method may include storing the set-related state information in a main key management module and storing the set-related backup state information in a backup key management module, wherein the main key management module and the backup key management module are at least two distinct hardware secure modules, HSMs.

Using separate hardware secure modules for main and backup state storage enhances the overall security and reliability of the key management system.

The method may include, upon receiving a sign request, checking if the database is unlocked, if the database is unlocked, locking the database to prevent access to the database in response to other sign requests and then retrieving the set-related state information from the database, updating the set-related state information and storing the updated set-related state information in the database, unlocking the database, and generating the signature using the set-related state information retrieved prior to updating said set-related state information.

This database locking and unlocking process ensures a safe access to the state information, specifically when multiple signature requests might attempt to use the same key simultaneously.

The set-related state information may be cryptographically protected by at least one algorithm from the group comprising authentication and encryption, to be stored and used by the at least one processor.

In a second aspect, a data processing system comprising at least one processor configured to perform the steps of the method according to the first aspect is provided.

In a third aspect, a computer program comprising instructions which, when the program is executed by a computer, cause the computer to carry out the steps of the method according to the first aspect is provided.

In a fourth aspect, a computer-readable storage medium comprising instructions which, when executed by a computer, cause the computer to carry out the steps of the method according to the first aspect is provided.

### BRIEF DESCRIPTION OF FIGURES

Embodiments of the invention will be described, by way of example, with reference to the following drawings, in which:
Fig. 1 illustrates a block diagram of a system for generating and managing digital signatures, according to a first embodiment.
Fig. 2 illustrates a flowchart of a method for generating digital signatures using for example a stateful hash-based signature algorithm, according to the first embodiment.
Fig. 3 illustrates a flowchart depicting a signature generation process, according to the first embodiment.
Fig. 4 illustrates a flowchart showing a sequence of steps for generating a signature while updating key set states, according to a second embodiment.
Fig. 5 illustrates a flowchart of a state initialization process for initializing key set states, according to the second embodiment.
Fig. 6 illustrates a flowchart for processing signature requests in a database management system, according to a third embodiment.

Common reference numerals are used throughout the figures to indicate similar features.

### DETAILED DESCRIPTION

The present disclosure relates to a method and system for generating digital signatures using at least one finite set of private keys. Each set of private keys is associated with a corresponding public key that can be derived from the set of private keys. For example, the generation of signatures uses a stateful hash-based signature algorithm considered as Quantum resistant.

The signatures are generated using private keys from the finite set(s), with each private key used only once to generate one signature. This one-time use of private keys guarantees security by preventing key reuse. To track the one-time use of keys within a set, a set-related state information - or state value - is updated.

The invention provides a solution to security constraints associated with the key management and signature generation in the digital signature method, while maintaining security and efficiency.

An aspect of the present method involves, for at least one signature to be generated, advantageously for each signature to be generated, updating the set-related state information prior to generating said signature. This approach reduces the risk of key reuse, especially in the event of an attack or technical failure (e.g., power outage) immediately after computing the signature.

Some embodiments utilize a plurality of finite sets of private keys successively for generating signatures. This overcomes the limitation on the number of usable keys and signatures and allows for continued signature generation even after exhausting the private keys in a given set. When transitioning between sets, various techniques may be employed to maintain security and ensure proper key management.

In certain implementations, before switching or transitioning from a current set of private keys to a subsequent set of private keys, the public key of the subsequent set is signed using a private key from the current set. This process ensures the integrity and authenticity of the new public key.

Embodiments may include determining when to switch between sets based on predefined conditions. For example, switching may occur when the count of unused keys in the current set falls below a threshold or when a validity period assigned to the current set expires.

When transitioning between sets, the method may include transmitting a key update message to one or more entities responsible for validating signatures. This message may include the signed public key of the subsequent set, facilitating the transition between public keys associated with the key sets for signature validation.

Certain embodiments use backup state information in addition to the primary set-related state information to track the one-time use of keys within a set.

The backup state information may be updated in advance of updates to the primary state information, to avoid any key reuse and provide an additional layer of security. This backup state information can be utilized in a recovery mechanism after events such as power failures or attacks, ensuring the system can resume secure operations without compromising key usage integrity.

In some approaches, when initiating use of a new set of private keys, both the primary and backup state information are initialized. The backup state information may be initialized to a value derived from the initial value of the primary state information by increasing it by a predefined increment.

Some embodiments utilize database management techniques for storing and accessing the set-related state information to maintain a persistent and correct state information and ensure that the same key is not reused, for example in the context of concurrent signature requests. These techniques may rely on a locking mechanism to prevent concurrent access to the database and ensure that the same state value is not reused to process two or more signature requests. The database lock may be activated only during retrieving and updating the state information in the database, but not when computing the signature. In other words, the database may be unlocked after retrieving and updating the state information in the database, before starting the operation of signature computation. This approach allows for improved performance in execution and computation speed.

The method and system described herein provide flexible and secure approaches for generating digital signatures using finite sets of private keys, with various features to enhance security, manage key transitions, and maintain accurate state information.

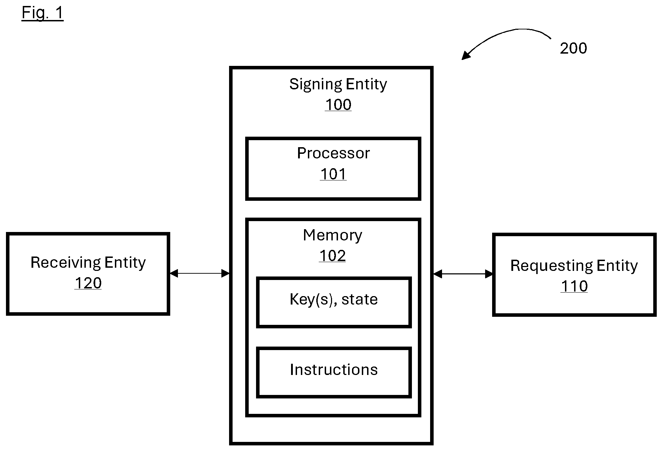

FIG. 1 illustrates a block diagram of a system 200 for generating and managing digital signatures. The system 200 includes a signing entity 100, at least one requesting entity 110, and at least one receiving entity 120. The system 200 can be adapted to carry out the method of signature generation and state management according to any of the embodiments described later in the description.

The signing entity 100 comprises at least one processor 101 and at least one memory 102. The memory 102 stores:
- key(s) such as seed key(s), private key(s), public key(s),
- state information,
- other necessary information for signature generation, and
- instructions of a computer program which, when the program is executed by the processor 101, cause the processor 101 to carry out the steps of the digital signature generation method that will be described later.

The requesting entity 110 is configured to communicate with the signing entity 100 to request digital signatures for signing data, message(s), or file(s). It may be implemented in hardware, software, or a combination thereof. The requesting entity 110 may be internal or external to the system 200.

The receiving entity 120 is configured to store in memory the public key corresponding to an active set of private keys, communicate with the signing entity 100, receive signed data, message(s) or document(s), and verify the validity of the signatures typically prior to using this data, message(s) or file(s). It may be implemented in hardware, software, or a combination thereof. The receiving entity 110 may be internal or external to the system 200.

The processor 101 is configured to process signature requests from the requesting entity 110 and generate signatures using private keys from a set of private keys associated with a public key, with each private key used only once to generate one signature. These private keys can be stored in the memory 102 or generated on demand for example by key derivation from a seed or master key stored in the memory 102. The memory 102 maintains the state information associated with the private keys of the key set currently used to track their usage.

In an embodiment, the signing entity 100 is configured to manage the communication flow between the requesting entity 110 and receiving entity 120, ensuring proper signature generation and data distribution according to the stored instructions and state information. It may include one or more communication interfaces (not represented in figure 1).

In some embodiments, when transitioning from a current set of private keys to a subsequent set of private keys, the signing entity 100 may be configured to transmit a key update message to the receiving entity 120. The key update message includes a signed public key of a subsequent set of private keys.

Optionally, the key update message may include temporal metadata or timing information. This temporal metadata may include an indication of a point in time from which the public key of the subsequent set is to be used by the receiving entity 120 for signature validation and/or a validity period or duration for this subsequent set. The key update message may be at least partially authenticated (i.e., signed) and/or encrypted, specifically if it contains sensitive data along with the signed public key, such as the temporal metadata.

The computer program stored in the memory 102 comprises instructions which, when executed by the processor 101, cause the processor 101 to carry out the steps of the digital signature generation method that will be described later. The computer program may be stored on a computer-readable storage medium, which when executed by the processor 101, causes the processor 101 to perform the steps of the digital signature generation method.

The system 200 may be implemented as a distributed signature generation and validation system, with the signing entity 100, requesting entity 110, and receiving entity 120 potentially located in different physical or logical locations. This distributed architecture allows for flexible and scalable signature generation and validation processes across various applications and use cases.

### First Embodiment

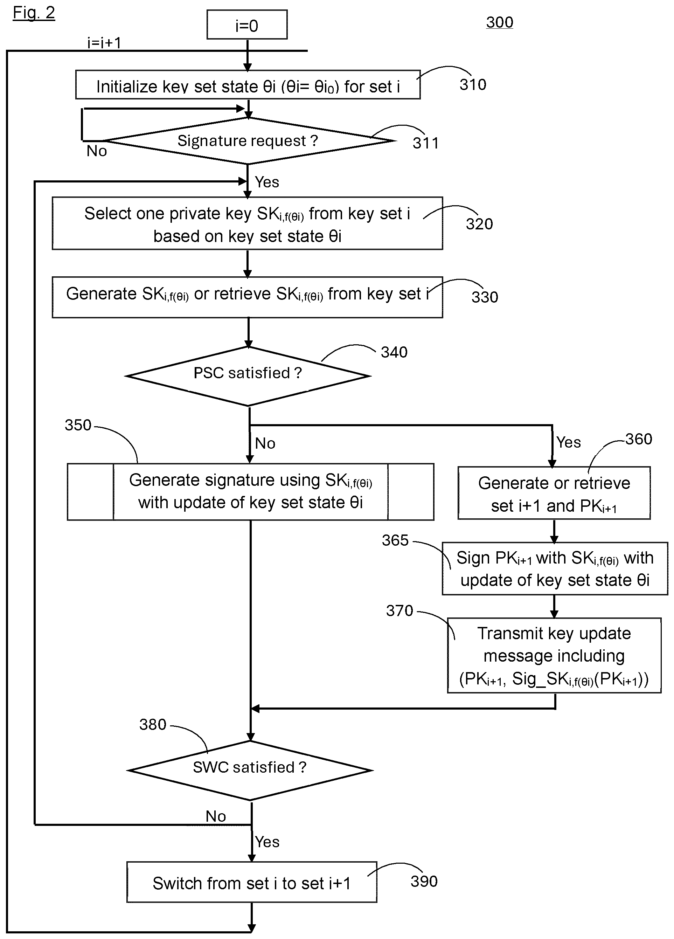

FIG. 2 illustrates a flowchart of a method 300 for generating digital signatures and managing state information, according to a first embodiment. The method 300 may utilize, for example, a stateful hash-based signature algorithm, and may be executed by the signing entity 100.

The method 300 begins with a step 310 of initializing a key set's state information θi related to a set i of private keys SKi,j, where:
- i represents a set index, with i starting from 0, and
- j represents a key index within the set i, with j ranging from 0 to N-1 (e.g., N = 1024 for a set of 1024 private keys).

The set i of private keys SKi,j is associated with a single public key PKi that may be derived from the plurality of private keys SKi,j.

As used herein, the term "key set's state information" refers to data associated with a finite set of private keys that tracks the usage status of individual keys within that set. This information may include, but is not limited to:
- a counter or index indicating how many keys from the set have been used;
- a bitmap or other data structure recording which specific keys have been used;
- metadata about the key set's lifecycle stage.

The key set's state information may be updated each time a private key from the set i is used to generate a digital signature, thereby ensuring that each private key SKi,j is used only once. A key selection algorithm, or rule, f may be executed to determine which private key SKi,j from the set i should be used, based on the state information. In this way, the state information enables the system to track usage and select the appropriate private key SKi,j for signature generation, thereby preserving the one-time-use property of each key within the set.

The key set's state information may be stored, in a secure manner, in the memory 102, a database, and/or other persistent storage accessible to the signing entity 100. It may be cryptographically protected by encryption and/or authentication for secure storage in the memory 102.

At step 311, the method 300 determines whether a signature request has been received by the signing entity 100 from a requesting entity 110. Upon receipt of a signature request, the method proceeds to step 320, where a private key SKi,f(θi) is selected or identified from key set i, based on the key set state θi. A key selection algorithm f can be applied to the current state θi to determine the index j of the key to be used, such that j=f(θi). In one illustrative and non-limiting embodiment, the key set state θi is represented by a counter indicating the number of keys from set i that have already been used and the selected index j is set equal to the current counter value, i.e., j=θi. In such embodiment, private keys SKi,j of the set i are used sequentially with j ranging from 0 to N-1. However, alternative selection algorithms f may be used, provided they satisfy certain constraints. Specifically, the key selection mechanism may ensure that:
- each private key is used only once for signing;
- given the current state θi, it is possible to deterministically compute the next state θi+1, corresponding to the next private key to be used;
- the system can determine the number of remaining unused keys in the set i; and
- optionally, the current state θi provides enough information to identify a previous state, enabling traceability if needed.

In step 330, after identifying the index j=f(θi) of the key to be used in the step 311, the method 300 either generates the selected private key SKi,f(θi) or retrieves it from a pre-computed set of keys (namely, the set i). If the private keys SKi,j are generated on-demand, the method may use a key derivation function (KDF) that takes a master or seed key (stored in memory 102), the key index j (determined by f(θi)), and potentially other parameters like the set index i or a set's validity period information, as inputs. This approach saves storage space but may require more computational resources.

Alternatively, if the keys SKi,j have been pre-computed and securely stored, for example in the memory 102, the method simply retrieves the appropriate key from secure storage. This method offers faster key access but requires more storage space and careful key management to prevent unauthorized access.

The method 300 then moves to a step 340 to determine if a Pre-Switch Condition (PSC) is satisfied.

As used herein, the term "Pre-Switch Condition" or "PSC" refers to a predetermined condition that, when satisfied, triggers preparatory actions for transitioning from a current set i of private keys to a subsequent set i+1 of private keys, for example in a stateful hash-based signature scheme. The PSC is evaluated before the actual switching of key sets occurs and may be based on one or more factors such as:
- the number of remaining unused private keys in the current set i reaching a predefined threshold (e.g., a first threshold TH1 and a second threshold TSH2 are set as Pre-Switch Condition and Switch Condition respectively, with TH1>TH2) ;
- the number of private keys already used in the current set i reaching a predefined threshold;
- a predefined time interval before expiration of a validity period assigned to the current set i of private keys ;
- a predefined time interval before an anticipated, evaluated, or scheduled switching event;
- a predefined time interval after starting usage of the current set i;
- a determination that sufficient system resources are available for generating the subsequent set i+1 of private keys while the current set i is still in active use for signature generation.

If the PSC is not satisfied, the method 300 proceeds to a step 350 where a signature is generated using the private key SKi,f(θi) with an update of key set state θi.

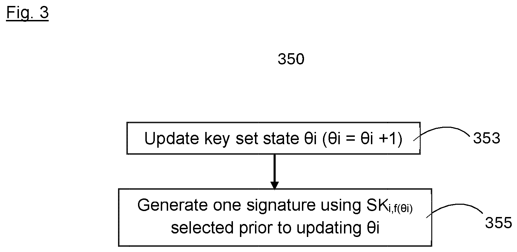

FIG. 3 illustrates a flowchart depicting the signature generation process of step 350 in more detail. The process begins at a step 353, where the key set state θi is updated, for example according to the formula θi = θi + 1 (in other words, the key set state θi is incremented by 1), advantageously before any signature computation occurs. Following the state update, the process moves to a step 355, where the requested signature is generated using SKi,f(θi), which represents the private key from the set i selected prior to updating θi. This approach of updating the state prior to generating the signature provides significant security advantages over conventional approaches that update state after signature generation. Specifically, it reduces the risk of key reuse in case of system failures, power outages, or attacks that might occur during or immediately after signature computation.

For example, in the step 355, the signing entity 100 generates a digital signature for data or a message or a file that was previously received from the requesting entity 110 as part of a signature request. This signature is generated using the private key SKi,f(θi) that was selected prior to updating the state value.

If the PSC is satisfied, the system may initiate processes such as generating or retrieving the subsequent set i+1 of private keys, and then signing the public key of the subsequent set i+1 using a private key from the current set i, and optionally preparing key update message(s) for transmission to receiving entity/entities, as described below in more detail. The PSC serves as an early indicator to ensure smooth and secure transitions between key sets without interrupting the signature generation process.

Returning to FIG. 2, if the PSC is satisfied at step 340, the method 300 moves to a step 360 to generate or retrieve the subsequent set i+1 and the associated public key PKi+1. This step may ensure the continuity of the signature generation process, for example as the current set i of private keys approaches exhaustion. "Generate the subsequent set i+1" refers to dynamically creating the subsequent set i+1 on demand, while "retrieve the subsequent set i+1" refers to retrieving the subsequent set i+1 from memory 102 in case this subsequent set i+1 was previously generated and stored, typically when the size N of the sets is not too large.

The generation of the subsequent set i+1 involves creating a new set of private keys SKi+1,j, where j ranges from 0 to N-1, similar to the structure of the current set i. This new set is associated with a single public key PKi+1, which is derived from the private keys in set i+1. The process of generating the subsequent set and its public key may involve several sub-steps such as:
- generating a new seed or master key for set i+1, if using a key derivation function approach;
- deriving or generating the individual private keys SKi+1,j for the new set i+1, from the new seed or master key and the key index j, and potentially other parameters like the set index i+1 or a set's validity period information, as inputs of the key derivation function;
- computing the public key PKi+1 based on the newly generated private keys SKi+1,j with j ranging from 0 to N-1.

In this step 360, the set i+1 needs to be generated to enable computation of the public key PKi+1. After the set i+1 has been generated and the public key PKi+1 has been computed, the set i+1 can be deleted from memory 102 to save storage space. Then, when the set i+1 needs to be later used to generate signatures, the private keys SKi+1,j can be generated dynamically, on demand, typically by key derivation from a seed or master key stored and maintained in the memory 102.

Alternatively, the complete set i+1 of private keys, generated in step 360, can be stored and maintained in memory 102 for later use when generating signatures based on this set i+1. This latter approach can be advantageous if the size of the sets is not too large and/or if the storage capacities of the signing entity 100 are sufficient.

It should be noted that different key sets may have different sizes. For example, the size N of the set i may differ from the size N' of the subsequent set i+1. This flexibility allows the system to adapt to changing security requirements or operational constraints over time.

At a step 365, the public key PKi+1 of the subsequent set i+1 is signed with the private key SKi,f(θi) with an update of key set state θi. Similar to step 350 shown in FIG. 3, the key set state θi may be updated prior to generating the signature of the public key PKi+1.

The method 300 then proceeds to a step 370 to transmit a key update message including the public key PKi+1 of the next set i+1 signed with the private key SKi,f(θi) of the current set i, which can be expressed as (PKi+1, Sig_SKi,f(θi)(PKi+1)) where Sig_SKi,f(θi)(PKi+1) represents the signature of PKi+1 using SKi,f(θi), to the receiving entity/entities 120.

The key update message may include temporal metadata, along with the signed key (PKi+1, Sig_SKi,f(θi)(PKi+1)). This temporal metadata may include at least one of:
- indication of a point in time from which the public key PKi+1 is to be used by the receiving entity 120 for signature validation, and
- validity time period, or validity duration, of this public key PKi+1.

The key update message may be at least partially authenticated (i.e., signed) and/or encrypted. Specifically, the temporal data may authenticated and/or encrypted. The key used for this authentication and/or encryption can be another private key of the current set i, different from the one used to sign PKi+1.

However, the temporal metadata within the key update message is optional, particularly if the sets have validity periods that are pre-configured in the receiving entity/entities 120. In such case, the receiving entity/entities 120 would already know the specific time period when the new public key PKi+1 should be used.

Following either step 350 or step 360, the method 300 moves to a step 380 to determine if a Switch Condition (SWC) is satisfied. The SWC may include a count of remaining unused keys in the current set i being less than or equal to a predefined limit or the expiration of a validity period assigned to the current set i. If the SWC is not satisfied, the method 300 returns to step 311 to continue the process of signature generation using the current set i.

If the SWC is satisfied, the method 300 proceeds to a step 390 to switch from set i to set i+1, and then returns to step 311, where the process of signature generation is continued using the new set i+1.

For each set, information including the validity period of the set may be cryptographically protected by at least one algorithm from the group comprising authentication and encryption, to be stored in memory 102 and used by the processor 101. The validity period of the current set may be used as an input parameter in a key derivation process for computing the corresponding private key from a master seed key.

The set-related state information θi may also be cryptographically protected by at least one algorithm from the group comprising authentication and encryption, to be stored in memory 102 and used by the processor 101.

### Second Embodiment

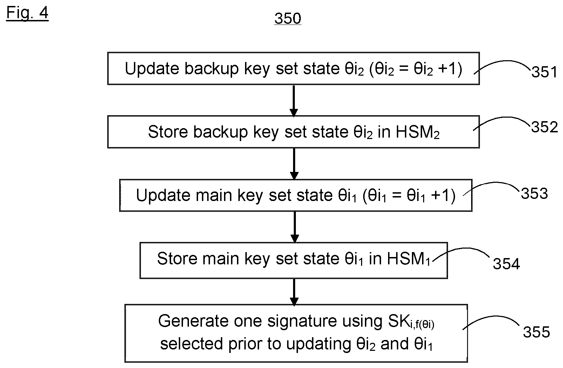

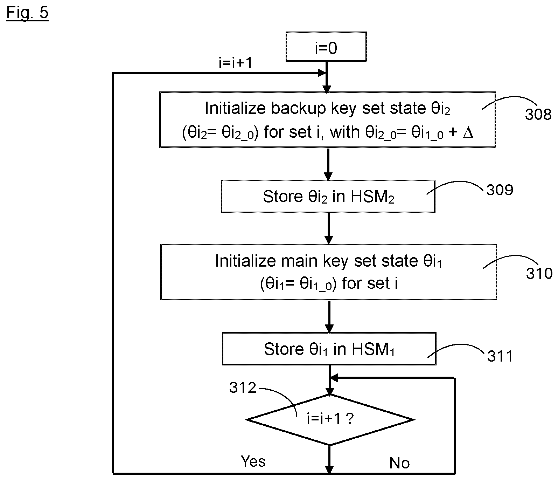

The method 300 may include an enhanced signature generation process 350, according to a second embodiment, that is based on the first embodiment described in connection with figures 2 and 3, and only differs from this first embodiment by utilizing backup key set states and multiple hardware secure modules (HSMs) to improve security and reliability. This process is illustrated in FIG. 4 and FIG. 5.

FIG. 4 shows a flowchart of the signature generation process 350 that incorporates backup state management to manage a backup set information related to the current set i, according to the second embodiment.

The term "backup set information" refers to data associated with a finite set of private keys that serves as a complementary security mechanism to the primary set-related state information, reflecting an advanced state rather than being a redundant copy, as it is deliberately maintained ahead of the primary state information, as will be explained below in more detail. The backup set information can be maintained separately from the primary set-related state information to provide an additional layer of security and fault tolerance.

FIG. 5 illustrates a flowchart of a state initialization process for initializing the primary state information θi1 and the backup state information θi2, both related to the current key set i. This process is executed for each set i of private keys, starting from i=0 and repeated after each transition from a current set i to a subsequent set i+1, to initialize θi1 and θi2 prior to start generating signatures with the corresponding set.

The state initialization process begins with a step 308 of initializing the backup key set state θi2 for set i. The backup key set state θi2 is set to a second initial state value θi2_0, which is derived by increasing a first initial state value θil_0 by a predefined increment Δ : θi2 = θi1_0 + Δ. For example, the predefined increment Δ may be 1. Alternatively, it may be set to a value more than 1 as needed.

In a step 309, the initialized backup key set state θi2_0 is stored in a hardware secure module (HSM), referred to as HSM2. HSM2 serves as a backup key management module, providing an additional layer of security.

Following this, a step 310 initializes the main key set state θi1 for set i to the first initial state value θi1_0 (θi1 = θi1_0).

The first initial state value θi1_0 is typically a predetermined value that is configured or established within the signing entity 100 before the signature generation process begins. This preset value θi1_0 serves as the starting point for tracking key usage within each set and may be stored in the memory 102 or another secure storage component of the signing entity 100. For example, θi1_0=0 when the set i has no private key already used.

A step 311 then stores the initialized main key set state θi1_0 in a hardware secure module, referred to as HSM1, separate from HSM2. HSM1 functions as the main key management module.

By initializing the backup key set state θi2 to a value slightly ahead of the main state θi1, the system maintains a safety margin to prevent key reuse in case of unexpected failures or attacks.

HSM1 and HSM2 may be distinct hardware secure modules, each providing secure storage and processing capabilities for their respective key set states. The use of separate HSMs for main and backup states enhances security by providing physical isolation. The signing entity 100 may be implemented on HSM1, providing a secure environment for the signature generation process.

Then, in a step 312, the processor 101 monitors for a transition from the current set i to the next set i+1. If a transition has occurred, the process loops back to step 308 to reinitialize the states for the new set i+1. If no transition has occurred, the process returns to step 312 to continue monitoring for a transition.

Returning to FIG. 4, after the initialization of both the main key set state θi1 and the backup key set state θi2 as described in FIG. 5, and after a signature request has been received in step 311 and the subsequent steps 320-340 have been executed, the enhanced signature generation process 350 begins with step 351. In step 351, the backup key set state θi2 is updated first by incrementing its value according to the formula θi2 = θi2 + 1. This prioritized update of the backup state before the main state provides an additional security layer against potential key reuse.

In a step 352, the updated backup key set state θi2 is stored in the backup hardware secure module HSM2. This step can be performed by the backup hardware secure module HSM2 itself when receiving information from HSM1 in order to trust the operation process.

The process 350 then proceeds to a step 353, where the main key set state θi1 is updated by incrementing the main key set state θi1 (θi1 = θi1 + 1). This step 353 is similar to step 353 in the first embodiment shown in FIG. 3, where the key set state θi is updated. Following this update, in a step 354, the updated main key set state θi1 is stored in the separate main hardware secure module HSM1.

After updating and storing both the backup and main key set states, the process 350 moves to the step 355 where a signature is generated using the private key SKi,f(θi) selected prior to updating θi2 and θi1. This step 355 is similar to step 355 in the first embodiment shown in FIG. 3, where the signature is generated using the private key selected prior to updating the key set state.

This enhanced signature generation process 350 with backup states provides several advantages. By updating and storing the backup state in advance of the main state, the system reduces the risk of key reuse in case of unexpected failures or attacks. Indeed, by maintaining the backup state ahead of the main state, the system creates a safety buffer that can help prevent the accidental reuse of private keys in various scenarios. For example, if there's a sudden power failure or system crash during the signature generation process, the backup state being ahead ensures that even if the main state update was not completed, the system can still recover to a safe state where no keys have been reused.

The backup state information can be utilized in a recovery mechanism that may be triggered after events such as power failures, hardware malfunctions, software crashes, or security breaches. This recovery mechanism allows the system to resume secure operations without compromising key usage integrity by determining an appropriate state to use based on the backup state information. The advantages of such a recovery mechanism include minimized downtime after failures, prevention of security vulnerabilities that could arise from key reuse, and maintenance of operational continuity even in difficult conditions.

Furthermore, this mechanism offers protection against certain types of attacks that might attempt to manipulate the state information. If an attacker somehow manages to roll back or corrupt the main state, the advanced backup state can serve as a reference point to detect such tampering. In case of detection of such attack, the backup state can be used instead of the main state as a countermeasure, ensuring continued secure operation of the signature system . This is particularly important in stateful hash-based signature schemes where the security of the entire system relies heavily on the proper management and non-reuse of private keys.

The use of two or more separate hardware secure modules HSMs for storing the main and backup states further enhances this security model. By physically isolating these critical pieces of information, the system creates multiple barriers that an attacker would need to overcome to compromise the key management process. This separation also ensures that even if one HSM fails or is compromised, the other can still maintain the integrity of the key usage tracking.

### Third Embodiment

The method 300 may include a database management process as a third embodiment that can be based on either the first embodiment described in connection with Figures 2 and 3 or the second embodiment described in connection with Figures 4 and 5.

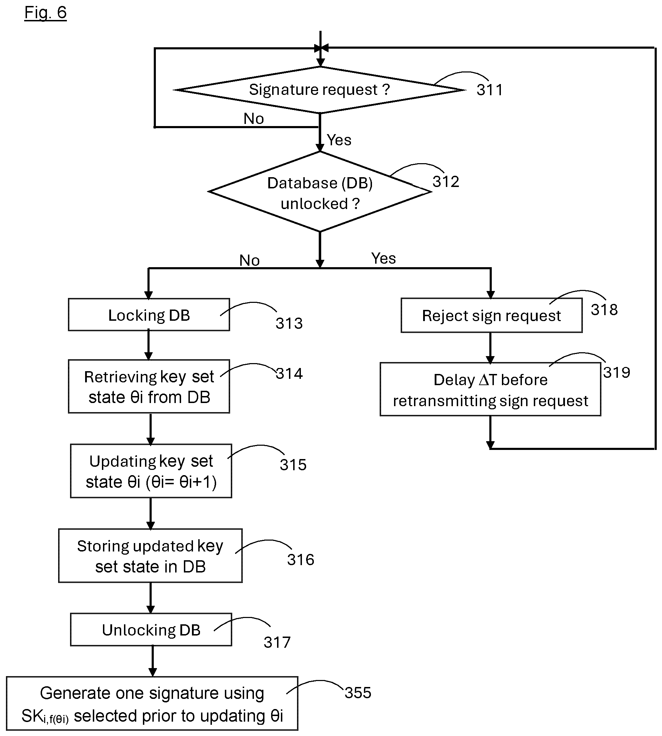

In this third embodiment, the memory 102 includes at least one database (DB) for storing the key(s) such as seed key(s), private key(s), public key(s), state information, and other necessary information for signature generation. This process, illustrated in FIG. 6, addresses for example scenarios where multiple applications or processes, typically running within a same system, may request signatures simultaneously, potentially resulting in using the same key for two signatures.

FIG. 6 illustrates a flowchart for processing signature requests in a database management system, according to the third embodiment. The database management system may be part of the signing entity 100.

The flowchart begins with a step 311 of determining whether a signature request has been received by the processor 101. If no signature request has been received, the process loops back to step 311. If a signature request has been received, the process determines whether the database DB is unlocked at a step 312.

If the database DB is unlocked, the process follows a sequence of steps starting with a step 313 of locking the database DB. Locking the database DB refers to a process of temporarily restricting access to the database DB containing the key set state information in order to prevent concurrent modifications by multiple signature generation processes. This locking mechanism ensures that only one process can read and update the state information at a time, thereby maintaining data integrity and preventing potential key reuse. The lock is typically applied before retrieving or updating state information and released immediately after, allowing other processes to access the database for subsequent operations.

The process then continues to a step 314 where the processor 101 retrieves the key set state θi from the database DB. At a step 315, the process updates the key set state by incrementing θi: θi = θi + 1. The updated key set state is then stored in the database DB at a step 316. At a step 317, the database is unlocked, enabling the processing of other signature requests.

The process then proceeds to a step 355 where one signature is generated using the private key SKi,f(θi) selected prior to updating key set state θi in step 315.

If the database DB is locked in step 312 (branch Yes), the process moves to a step 318 where the signature request is rejected. Following the rejection, at a step 319, the process may implement a delay ΔT before newly transmitting this signature request to the processor 101 and then returns to the beginning of the flowchart (step 311).

This database management process allows for efficient handling of multiple concurrent signature requests while maintaining the integrity of the key set state and preventing key reuse. By locking the database only during the state retrieval and update operations, and unlocking it before signature generation, the system allows for improved performance in execution and computation speed.

The processes described in the first, second, and third embodiments can be implemented independently or combined or used in different scenarios to enhance the security and efficiency of digital signature generation.

In one example, the signature generation process of the first embodiment can be integrated with the backup state management of the second embodiment and the database management of the third embodiment. This combination provides multiple layers of security and redundancy. Alternatively, each embodiment can be implemented on its own to address specific security or operational requirements.

The implementation of each embodiment independently allows for tailored solutions that address specific security or operational needs of different systems or organizations. For instance, the first embodiment focusing on updating the set-related state information prior to signature generation may be particularly suitable for systems where minimizing the risk of key reuse due to unexpected failures is a major challenge. The second embodiment, which incorporates backup state management and multiple hardware secure modules, could be implemented in high-security environments where redundancy and physical isolation of critical components are essential. The third embodiment, with its database management approach, may be applied for systems handling concurrent signature requests from multiple applications or processes.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices.

Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionality may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A method (300) for generating digital signatures using at least one finite set of private keys, each set being associated with a public key, said method comprising the steps, performed by at least one processor (101), of: generating (355) the signatures using the private keys from the at least one set, with each private key used only once to generate one signature, while updating a set-related state information (θi) for tracking the one-time use of keys of said set; **characterized in that**, for at least one signature to be generated, updating (353) the set-related state information (θi) is performed prior to generating (355) said signature.

2. The method according to claim 1, wherein, a plurality of finite sets of private keys being successively used for generating the signatures, the method further comprises, prior to switching from a current set (i) to a subsequent set (i+1), a step (365) of signing the public key (PKi+1) of said subsequent set using a private key (SKi,f(θi)) of said current set (i).

3. The method according to claim 2, wherein:
- switching (390) from the current set (i) to the subsequent set (i+1) is performed in response to determining (380) that a predetermined switching condition (SWC) has been satisfied, and
- the predetermined switching condition (SWC) includes at least one of a count of unused keys in the current set (i) that is less than or equal to a predefined limit and the expiration of a validity period assigned to the current set (i).

4. The method according to claim 3, wherein, for each set (i), an information including the validity period of said set is cryptographically protected by at least one algorithm from the group comprising authentication and encryption, to be stored and used by the at least one processor (101).

5. The method according to claim 3 or 4, further comprising, for each signature, a step (330) of computing the corresponding private key (SKi,f(θi)) by executing a key derivation process from a seed key, wherein the information including the validity period of the current set (i) is used as an input parameter in the key derivation process.

6. The method according to any of claims 2 to 5, wherein the step (365) of signing the public key (PKi+1) of the subsequent set (i+1) using a private key (SKi,f(θi)) of the current set (i) is performed in response to determining (340) that a pre-switch condition (PSC) has been satisfied.

7. The method according to claim 6, further comprising a step (360) of generating or acquiring the subsequent set (i+1) of private keys and the associated public key (PKi+1) in response to determining (340) that the pre-switch condition (PSC) has been satisfied.

8. The method according to any of claims 2 to 7, further comprising a step (370) of transmitting a key update message including the signed public key (PKi+1) of the subsequent set (i+1) to at least one validation entity (120) configured to validate the signatures.

9. The method according to claim 8, wherein the key update message further includes temporal metadata comprising at least one of an indication of a point in time from which the public key (PKi+1) of the subsequent set (i+1) is to be used and a validity period of the public key (PKi+1) of the subsequent set (i+1).

10. The method according to any of claims 1 to 9, further comprising, for at least one signature to be generated, updating a set-related backup state information (θi2), distinct from the set-related state information (θi1), in advance of the corresponding update made to the set-related state information (θi1).

11. The method according to claim 10, further comprising, upon initiation of use of the or each set (i) of private keys, the steps of;
- initializing (310) the set-related state information (θi1) to a first initial state value (θi1_0);
- initializing (308) the set-related backup state information (θi2) to a second initial state value (θi2_0); wherein the second initial state value (θi2_0) is derived by increasing the first initial state value (θi1_0) by a predefined increment (Δ).

12. The method according to any of claims 10 and 11, further comprising the steps of:
- storing (311) the set-related state information (θi1) in a main key management module (HSM1),
- storing (309) the set-related backup state information (θi2) in a backup key management module (HSM2), wherein the main key management module (HSM1) and the backup key management module (HSM2) are at least two distinct hardware secure modules, HSMs.

13. The method according to any of claims 1 to 12, wherein the set-related state information (θi) of the current set (i) is stored in a database (DB), and, upon receiving a signature request, the method comprises the successive steps of:
- checking (312) if the database (DB) is unlocked,
- if the database (DB) is unlocked, locking (313) the database (DB) to prevent access to the database (DB) in response to other signature requests and then retrieving (314) the set-related state information (θi) from the database (DB),
- updating (315) the set-related state information (θi) and storing (316) the updated set-related state information (θi) in the database (DB), - unlocking (317) the database (DB);
- generating (355) the signature using the set-related state information (θi) retrieved prior to updating said set-related state information (θi).

14. The method according to any of claims 1 to 13, wherein the set-related state information (θi) is cryptographically protected by at least one algorithm from the group comprising authentication and encryption, to be stored and used by the at least one processor (101).

15. A data processing system (200) comprising at least one processor (101) configured to perform the steps of the method according to any of claims 1 to 14.

16. A computer program comprising instructions which, when the program is executed by a computer, cause the computer to carry out the steps of the method according to any of claims 1 to 14.

17. A computer-readable storage medium comprising instructions which, when executed by a computer, cause the computer to carry out the steps of the method according to any of claims 1 to 14.
